# EUROPÄISCHE PATENTSCHRIFT

(11) **EP 3 808 576 B1**
(45) Veröffentlichungstag und Bekanntmachung des Hinweises auf die Patenterteilung: **26.07.2023**
(21) Anmeldenummer: 20197683.4
(22) Anmeldetag: 23.09.2020
(51) Int. Cl.: B60C 13/00, B29C 33/38, B29C 33/42

(54) **FAHRZEUGREIFEN AUFWEISEND EINE SCHRAFFURFLÄCHE UND VERFAHREN ZUR HERSTELLUNG EINES FORMWERKZEUGS**
VEHICLE TYRE COMPRISING A HATCHED SURFACE AND METHOD OF MANUFACTURING A MOULD
PNEUS DE VÉHICULE COMPORTANT UNE SURFACE HACHURÉE ET UN PROCÉDÉ DE FABRICATION D'UN OUTIL DE MOULAGE

(30) Priorität: 14.10.2019 DE 102019215726
(43) Veröffentlichungstag der Anmeldung: 21.04.2021
(73) Patentinhaber: Continental Reifen Deutschland GmbH, 30165 Hannover (DE)
(72) Erfinder: Rittweger, Stefan, 30419 Hannover (DE); Jurco, Juraj, 30419 Hannover (DE)
(74) Vertreter: Continental Corporation

(56) Entgegenhaltungen:
- EP-A1- 3 730 317
- DE-A1-102018 204 245
- US-B2- 9 975 203

## Beschreibung

Die Erfindung betrifft einen Fahrzeugreifen mit Seitenwänden und einem Laufstreifen und mit zumindest einer Schraffurfläche auf einer äußeren Oberfläche, insbesondere auf einer der Seitenwände und/oder dem Laufstreifen, wobei die Schraffurfläche nebeneinander angeordnete Schraffurelemente aufweist, wobei die Schraffurelemente jeweils eine Schraffurrippe mit einem Grat sowie mit einander gegenüberliegenden Flanken aufweisen.

Derartige Schraffurflächen werden in der Regel im Zuge der Vulkanisation des Reifens mittels einer formgebenden eine Negativkontur der Schraffurfläche aufweisenden Vulkanisationsform in den Reifen geprägt. Eine strukturierte Oberfläche eines bereits vulkanisierten Reifens kann aber auch durch Abtragung, z.B. mittels Gravur, oder durch ein additives Verfahren erreicht werden. Derartige Schraffurflächen sind bekannt. Auf der Reifenseitenwand und/oder auf dem Laufstreifen werden sie z.B. zur Darstellung einer Markierung genutzt. Eine Markierung kann dabei Abbildungen, Schriftzeichen, Firmennamen, Firmenlogos, Kennzeichnungen, Flächen, etc umfassen. Die Schraffurfläche kann dabei Teil der Markierung sein und/oder diese ganz oder teilweise umgeben.

Die Streuung von Licht an den Flanken der Schraffurrippen verringert die Reflektion des Lichts an der Oberfläche des Reifens, wodurch die Helligkeitswirkung verändert ist. In der Regel wirken dabei mit Quererhebungen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand und/oder des Laufstreifens, ermöglicht. Hierdurch können Darstellungen von Markierungen verbessert sichtbar gemacht werden.

Bekannt ist beispielsweise aus der US 2012 227879 A1 ein Fahrzeugreifen, der auf seiner Seitenwand eine Vielzahl von weitgehend parallel zueinander angeordneten Schraffurrippen zur kontrastreichen Oberflächengestaltung und Hervorhebung einer Markierung aufweist. Nachteilig an derartigen Ausführungsformen ist, dass die Gestaltungsmöglichkeiten gering sind.

Aus US 9975203 B2 und DE 102018204245 A1 sind Schraffurrippen und Quererhebungen bekannt.

Das nachveröffentlichte Dokument EP 3730317 A1 offenbart Schraffurrippen mit parallel angeordneten Quererhebungen, welche jeweils nur eine Schraffurrippe kreuzen.

Aufgabe ist es daher, die Kontrastwirkung noch gezielter zu beeinflussen und die Kontrastwirkung weiter zu verbessern. Zudem soll eine gute Entlüftbarkeit bei der Herstellung des Reifens mittels einer Vulkanisationsform gegeben sein. Weiter soll ein entsprechendes Formwerkzeug einfach herstellbar sein.

Dies wird dadurch erreicht, dass die Schraffurelemente zudem jeweils Quererhebungen mit einem Grat sowie mit einander gegenüberliegenden Flanken aufweisen, dass die Quererhebungen dabei die jeweilige Schraffurrippe kreuzend angeordnet sind, wodurch sich die Grate der Quererhebungen und der Grat der jeweiligen Schraffurrippe in der Draufsicht kreuzen, dass jede der Quererhebungen genau eine Schraffurrippe kreuzt und dass zumindest eine erste Quererhebung der Quererhebungen jedes der Schraffurelemente eine Kontur der Schraffurrippe des jeweiligen Schraffurelements zumindest am Grat der Schraffurrippe überlagert.

Es hat sich gezeigt, dass Schraffurelemente mit derartigen die Schraffurrippe kreuzenden Quererhebungen eine deutlich stärkere Kontrastwirkung erwirken als Schraffurelemente, die frei von derartigen kreuzenden Quererhebungen sind.

Die Schraffurrippe sowie die Quererhebungen des Schraffurelements weisen jeweils einen Grat sowie sich entlang des Grates erstreckende einander gegenüberliegende Flanken auf. Die Flanken können beispielsweise in einem weitgehend spitzen Winkel oder in einem Knick oder in einer Rundung in den Grat übergehen. Entsprechend kann die Rippe oder die Erhebung im Bereich des Grates weitgehend spitz oder abgeflacht oder mit einer Rundung versehen ausgeführt sein.

Die Quererhebungen eines Schraffurelements sind die jeweilige Schraffurrippe des Schraffurelements kreuzend angeordnet, wodurch sich die Grate der Quererhebungen und der Grat der jeweiligen Schraffurrippe in der Draufsicht kreuzen. Der Grat jeder Quererhebung erstreckt sich somit in der Draufsicht beidseits des Grates der jeweiligen Schraffurrippe.

Die Flanken der Quererhebungen verstärken die Streuung, die Mehrfachreflektion sowie die Absorption von auf die Schraffurfläche fallenden Lichts. Zudem sind die Flanken der Schraffurrippen durch die Quererhebungen unterbrochen, wodurch der Kontrast weiter erhöht wird. Mehrfachreflektion an nebeneinander verlaufenden Schraffurelementen verstärkt den Effekt zusätzlich. Zudem erzeugen die Quererhebungen zusätzliche Schatteneffekte, die besonders auf dem schwarzen Gummi des Fahrzeugreifens ein deutliches Hervorheben der Schraffurfläche gegenüber den umgebenden Flächenbereichen bewirken. Da die Quererhebungen jeweils genau eine Schraffurrippe kreuzen, weist jede Quererhebung zudem zwei freie Endbereiche auf, die eine zusätzliche Streuung des Lichts in unterschiedliche Richtungen bewirken.

Wesentlich ist weiter, dass zumindest eine erste Quererhebung der Quererhebungen die Kontur der jeweiligen Schraffurrippe am Grat der Schraffurrippe überlagert. Hierdurch weist das Höhenprofil des Schraffurelements im Kreuzungsbereich der ersten Quererhebung mit der Schraffurrippe eine größere Höhe auf als durch die Höhe des Grates der Schraffurrippe gegeben ist. Hierdurch ist, insbesondere im jeweiligen Kreuzungsbereich, ein lokales Maximum des Schraffurelements erreichbar, wodurch eine stark verbesserten Kontrastwirkung erreichbar ist. Gleichzeitig kann durch die Überlagerung der Kontur im Bereich der Flanken der Schraffurrippe die Höhe der ersten Quererhebungen in Richtung der Enden der Quererhebung hin abfallen. Bedeutend ist, dass das lokale Maximum als Teil des quer zum Grat der Schraffurrippe ausgerichteten Grates der ersten Quererhebung eine gerichtete Reflexion bzw. Kontrastwirkung unterstützt. Hierdurch ist eine noch gezieltere Kontrastbeeinflussung ermöglicht.

Durch das Schraffurelement mit die Schraffurrippe kreuzenden Quererhebungen, wobei zumindest eine erste Quererhebung der Quererhebungen die jeweilige Schraffurrippe zumindest an ihrem Grat überlagert, ist die Kontrastwirkung somit noch gezielter beeinflussbar und verbesserbar.

Durch die Verbindung der Quererhebungen und der Schraffurrippe in den Kreuzungsbereichen ist auch eine vorteilhafte Entlüftbarkeit der Strukturfläche im Reifenbau ermöglicht. Weiter stabilisieren die Quererhebungen die Schraffurelemente in den Kreuzungsbereichen, wodurch die Schraffurelemente resistenter gegen Anscheuerung im Gebrauch des Reifens sind.

Die zumindest eine erste Quererhebung kann dabei der Kontur der jeweiligen Schraffurrippe folgen.

Zweckmäßig ist es, wenn mehrere, beispielsweise mindestens 50%, bevorzugt mindestens 80 %, besonders bevorzugt alle, der Quererhebungen eines Schraffurelements als erste Quererhebungen ausgeführt sind. Die Kontrastwirkung einer solchen Schraffurrippe ist weiter verbessert.

Zweckmäßig ist es auch, wenn mehrere, beispielsweise mindestens 50%, bevorzugt mindestens 80 %, besonders bevorzugt alle, der Schraffurelemente mindestens 50 % erste Quererhebungen aufweisen. Hierdurch ist die Kontrastwirkung über die gesamte Erstreckung der Schraffurfläche noch besser steuerbar und weiter verbesserbar.

Eine vorteilhafte Ausführungsform ist dadurch gegeben, dass zumindest eine der Schraffurrippen eine Höhe H von 0,1 mm bis 0,8 mm, bevorzugt von 0,2 mm bis 0,5 mm, besonders bevorzugt von 0,25 mm bis 0,35 mm, aufweist. Hierdurch ist eine günstige Dimensionierung zugunsten der Herstellbarkeit erreicht. Besonders vorteilhaft ist es dabei, wenn mehrere, bevorzugt alle, Schraffurrippen eine entsprechende Höhe H aufweisen.

Die Höhe H einer Schraffurrippe kann die entlang der Längserstreckung der Schraffurrippe gemittelte Höhe sein. Höhen können gemessen sein relativ zu einem Niveau, das einem mittleren Niveau des gesamten Schraffurgrundes des Markierungsbereichs entspricht. Höhen können auch gemessen sein bezüglich eines Niveaus, das einem Basisniveau entspricht, welches beispielsweise von einem Teil der Außenfläche des Fahrzeugreifens, insbesondere einem Boden einer auf der Oberfläche des Reifens ausgebildeten flachen Vertiefung, gebildet ist. Mittelwerte entsprechen in der Regel dem arithmetischen Mittelwert.

Weiter ist bei einer solchen Höhe, insbesondere in Zusammenhang mit einem Abstand von benachbarten Schraffurrippen von 0,4 mm bis 1,0 mm, bevorzugt 0,5 mm bis 0,7 mm, besonders bevorzugt 0,55 mm bis 0,60 mm, eine gute Kontrastwirkung erreichbar.

Eine vorteilhafte Ausführungsform ist dadurch gegeben, dass zumindest eine der ersten Quererhebungen die Kontur der jeweiligen Schraffurrippe am Grat der Schraffurrippe um eine Überlagerungshöhe von 0,05 mm bis 0,3 mm, bevorzugt von 0,1 mm bis 0,2 mm, überlagert. Bereits eine derartige geringe Überlagerungshöhe zumindest am Grat der Schraffurrippe ermöglicht eine vorteilhafte Verbesserung des Kontrastes bei gleichzeitig hoher Beständigkeit der ersten Quererhebung gegenüber Anscheuerung im Gebrauch.

Die Überlagerungshöhe ist gemessen senkrecht zur flächigen Erstreckung der Schraffurfläche.

Eine besonders vorteilhafte Kontrastwirkung ergibt sich, wenn dabei die Schraffurrippen eine Höhe H von 0,1 mm bis 0,8 mm, bevorzugt von 0,2 mm bis 0,5 mm, besonders bevorzugt von 0,25 mm bis 0,35 mm, aufweisen. Zweckmäßig ist es auch, wenn mehrere, beispielsweise mindestens 50% oder mindestens 80%, bevorzugt alle, der Quererhebungen der Schraffurfläche als derartige erste Quererhebungen ausgebildet sind.

Eine weitere vorteilhafte Ausführungsform ist dadurch gegeben, dass zumindest eine der ersten Quererhebungen die Kontur der jeweiligen Schraffurrippe am Grat der Schraffurrippe um eine Überlagerungshöhe von 0,1 mm bis 0,4 mm, bevorzugt 0,2 mm bis 0,3 mm, überlagert. Eine derartige große Überlagerungshöhe zumindest im Bereich des Grates ermöglicht eine hervorragende Verbesserung des Kontrastes. Eine besonders vorteilhafte Kontrastwirkung ergibt sich auch hier, wenn dabei die Schraffurrippen eine Höhe H von 0,1 mm bis 0,8 mm, bevorzugt von 0,2 mm bis 0,5 mm, besonders bevorzugt von 0,25 mm bis 0,35 mm, aufweisen. Zweckmäßig ist es auch, wenn mehrere, beispielsweise mindestens 50% oder mindestens 80%, bevorzugt alle, der Quererhebungen der Schraffurfläche derart ausgebildet sind.

Eine vorteilhafte Ausführungsform ist dadurch gegeben, dass zumindest eine der ersten Quererhebungen die Kontur der jeweiligen Schraffurrippe zumindest im Bereich der Flanken der Schraffurrippe um eine Überlagerungshöhe von 0,1mm bis 0,7mm, bevorzugt 0,2mm bis 0,5mm, überlagert. Durch eine solche Überlagerungshöhe ist die Verschattung bei gleichzeitig guter Entformbarkeit weiter verbesserbar. Zweckmäßigerweise überlagert die zumindest eine erste Quererhebung die Kontur der Schraffurrippe über die gesamte Höhe der Flanken.

Erfindungsgemäß weisen die Schraffurfläche zumindest zwei benachbarte Schraffurelemente auf deren Quererhebungen weitgehend parallel zueinander ausgerichtet sind, wobei die Quererhebungen des einen benachbarten Schraffurelements relativ zu den Quererhebungen des anderen benachbarten Schraffurelements versetzt, bevorzugt mittig versetzt, angeordnet sind.

Versetzt angeordnet bedeutet dabei, dass, in der Draufsicht, die Grate der Quererhebungen des einen benachbarten Schraffurelements in ihrer Verlängerung zwischen den Graten der Quererhebungen des anderen benachbarten Schraffurelements angeordnet sind. Mittig versetzt angeordnet bedeutet dabei, dass die Grate der Quererhebungen des einen benachbarten Schraffurelements in ihrer Verlängerung weitgehend mittig zwischen den Graten der Quererhebungen des anderen benachbarten Schraffurelements angeordnet sind.

Durch die versetzte Anordnung der Quererhebungen ist eine besonders dichte Anordnung der Schraffurelemente sowie bei dichter Anordnung eine besonders gleichmäßige Verteilung der Quererhebungen ermöglicht.

Zweckmäßig ist es dabei, wenn alle benachbarten Schraffurelemente derart ausgestaltet sind. Zweckmäßig kann es aber auch sein, wenn die Schraffurfläche zumindest zwei benachbarte Schraffurelemente aufweist, deren Quererhebungen weitgehend parallel zueinander ausgerichtet sind und wenn, in der Draufsicht, die Grate der Quererhebungen des einen benachbarten Schraffurelements in ihrer Verlängerung innerhalb der Quererhebungen des anderen Schraffurelements verlaufen, bevorzugt weitgehend deckungsgleich mit den Graten der Quererhebungen des anderen benachbarten Schraffurelements.

Eine vorteilhafte Ausführungsform ist dadurch gegeben, dass die Schraffurrippen der Schraffurelemente mit einem Abstand von 0,4 mm bis 1,0 mm, bevorzugt von 0,5 mm bis 0,7 mm, besonders bevorzugt von 0,55 mm bis 0,60 mm, angeordnet sind. Ein solcher Abstand ermöglicht eine verbesserte Kontrastwirkung bei gleichzeitig geringem Fertigungsaufwand. Abstände können gemessen sein zwischen den Graten bzw. deren Mittellinien der jeweiligen Strukturen in der Draufsicht.

Zweckmäßig ist es, wenn alle Quererhebungen zumindest eines der Schraffurelemente in einem Abstand von 0,2 mm bis 0,5 mm, bevorzugt von 0,25 mm bis 0,35 mm, angeordnet sind. Ein derartiger Abstand der Quererhebungen ist vorteilhaft für die Kontrastwirkung bei gleichzeitig geringem Fertigungsaufwand.

Eine vorteilhafte Ausführungsform ist dadurch gegeben, dass zumindest eines der Schraffurelemente zumindest zwei benachbarte erste Quererhebungen aufweist, die in einem Abstand von 0,2 mm bis 0,5 mm, bevorzugt von 0,25 mm bis 0,35 mm, angeordnet sind. Ein solcher Abstand der die Schraffurrippe überlagernden ersten Quererhebungen ermöglicht eine für eine besonders vorteilhafte Kontrastwirkung ausreichend dichte Anordnung der ersten Quererhebungen bei gleichzeitig geringem Fertigungsaufwand. Die Vorteile werden weiter verstärkt, wenn alle Schraffurelemente derart ausgestaltet sind. Die Abstände können gemessen sein zwischen den Kreuzungen der Grate der Quererhebungen mit dem Grat der jeweiligen Schraffurrippe.

Eine vorteilhafte Ausführungsform ist dadurch gegeben, dass die Längserstreckungsrichtung zumindest einer der Schraffurrippen einen Winkel 30° bis 90°, bevorzugt von 45° bis 90°, besonders bevorzugt von 60° bis 90°, mit der jeweiligen Längserstreckungsrichtung der sie kreuzenden ersten Quererhebungen einschließt. Der Winkel beeinflusst die lokale Dichteverteilung an geneigten Flanken im Anschluss an Kreuzungsbereiche. Bei einem Winkel von kleiner als 30° ist jedoch die Entformung des Reifens erschwert. Gleichzeitig wird, insbesondere über den Bereich der Flanken, der den Grat der Schraffurrippe üblagert, die Reflexionsrichtung beeinflusst. Ein Winkel von 45° bis 90° ermöglicht eine verbesserte Kontrastwirkung bei gleichzeitig guter Entformbarkeit. Die Entformbarkeit ist bei einem Winkel von 60° bis 90° weiter verbessert.

Zweckmäßig ist es dabei auch, wenn alle Quererhebungen eines Strukturelements den gleichen Winkel mit der jeweiligen Schraffurrippe einschließen. Hierdurch ist die Anzahl der zu gravierenden Richtungen zur Erzeugung der Schraffurfläche begrenzt. Dies ist weiter verbesserbar, wenn alle Quererhebungen des Schraffurelements die gleiche Ausrichtung aufweisen.

Eine vorteilhafte Ausführungsform ist dadurch gegeben, dass die Schraffurfläche zumindest zwei benachbarte Schraffurelemente aufweist, wobei die Längserstreckungsrichtung der Quererhebungen des einen Schraffurelements relativ zu der Längserstreckungsrichtung der Quererhebungen des anderen Schraffurelements in einem Bereich zwischen den beiden Schraffurelementen eine Komponente in die gleiche oder in die gegenläufige Erstreckungsrichtung des Bereichs aufweisen.

Weisen die Quererhebungen der beiden Schraffurelemente eine Komponente in die gleiche Richtung auf, so wird Licht an den beiden Schraffurelementen stark unterschiedlich gestreut bzw. reflektiert. Die Quererhebungen können einen spitzen Winkel miteinander einschließen. Weisen die Quererhebungen der beiden Schraffurelemente hingegen eine Komponente in gegenläufige Richtungen auf, so sind sich die in ihren Reflexionseigenschaften ähnlicher. Sie können weitgehend parallel zueinander ausgerichtet sein. Die Kontrastwirkung ist durch die unterschiedlichen Varianten steuerbar.

Eine vorteilhafte Ausführungsform ist dadurch gegeben, dass die Schraffurfläche zumindest zwei benachbarte Schraffurelemente aufweist, zwischen deren Quererhebungen ein lichter Abstand von 5 % bis 40 %, bevorzugt von 10 % bis 25 %, besonders bevorzugt von 13% bis 20 %, des Abstandes der Schraffurrippen der benachbarten Schraffurelemente besteht.

Es hat sich herausgestellt, dass ein solcher lichter Abstand die Entformbarkeit weiter verbessert. Auch ist hierdurch die Mehrfachreflexion von Licht an beiden der benachbarten Schraffurelementen steigerbar, wodurch die Kontrastwirkung weiter erhöht ist.

Der lichte Abstand ist dabei gemessen senkrecht zur Längserstreckungsrichtung der Schraffurelemente. Der lichte Abstand kann gemessen sein in einer Höhe H3, die 1/3 des Mittelwerts der Höhen H der beiden Schraffurrippen der benachbarten Schraffurelemente entspricht.

Für eine möglichst dichte Anordnung der Schraffurelemente kann es aber auch zweckmäßig sein, wenn die Schraffurfläche zumindest zwei benachbarte Schraffurelemente aufweist, deren Quererhebungen in einer Erstreckungsrichtung der Schraffurrippen der Schraffurelemente einander überlappen.

Eine vorteilhafte Ausführungsform ist dadurch gegeben, dass zumindest ein Schraffurelement derart ausgebildet ist, dass die Schraffurrippe des Schraffurelements einander gegenüberliegende Flanken aufweist, die einen Winkel von mindestens 50°, bevorzugt von 55° bis 65°, miteinander einschließen. Solche Flankenwinkel zeigen eine gute Kontrastwirkung. Eine entsprechende Negativform eines Formwerkzeugs wie einer Vulkanisationsform kann beispielsweise mittels Lasergravur geschaffen werden. Der Winkel kann gemessen sein zwischen den kreuzenden Quererhebungen. Besonders vorteilhaft ist es dabei, wenn die einander gegenüberliegenden Flanken einen derartigen Winkel über eine Höhenerstreckung aufweisen, die zumindest einem Viertel der Höhe H der Schraffurrippe entspricht. Der Vorteil verstärkt sich auch oder zudem, wenn mehrere, bevorzugt alle, Schraffurrippen derart ausgebildet sind.

Eine vorteilhafte Ausführungsform ist dadurch gegeben, dass zumindest eines der Schraffurelemente eine Schraffurrippe und/oder eine erste Quererhebung mit jeweils einander gegenüberliegenden Flanken aufweist, die einen Winkel von 4° bis 20°, bevorzugt von 12° bis 18°, miteinander einschließen. Durch einen derart steilen Flankenwinkel ist eine Mehrfachreflektion und damit eine verbesserte Kontrastwirkung erreichbar. Eine entsprechende Negativform eines Formwerkzeugs wie einer Vulkanisationsform kann mittels Lasergravur des Formwerkzeugs geschaffen werden. In Bezug auf die Schraffurrippe kann der Winkel gemessen sein zwischen zwei kreuzenden Quererhebungen. In Bezug auf die Quererhebung kann der Winkel gemessen sein außerhalb des Kreuzungsbereichs. Der Winkel kann auch gemessen sein im Überlagerungsbereich. Besonders vorteilhaft ist es dabei, wenn die einander gegenüberliegenden Flanken einen derartigen Winkel über eine Höhenerstreckung aufweisen, die zumindest einem Viertel der Höhe H der Schraffurrippe entspricht. Der Vorteil verstärkt sich auch oder zudem, wenn mehrere, bevorzugt alle, Schraffurelemente derart ausgebildet sind.

In einer zweckmäßigen Ausführungsform weist die Schraffurrippe einander gegenüberliegende Flanken auf, die einen Winkel von mindestens 50° miteinander einschließen und die zumindest eine erste Quererhebung weiset einander gegenüberliegende Flanken auf, die einen Winkel von 4° bis 20°, bevorzugt von 12° bis 18°, miteinander einschließen.

In einer anderen zweckmäßigen Ausführungsform weist sowohl die Schraffurrippe als auch die zumindest eine erste Quererhebung einander gegenüberliegende Flanken auf, die einen Winkel von 4° bis 20°, bevorzugt von 12° bis 18°, miteinander einschließen.

Zweckmäßig kann es auch sein, wenn die Schraffurrippe und/oder die erste Quererhebung einander gegenüberliegende Flanken aufweisen, die einen Winkel von von 4° bis 20°, bevorzugt von 12° bis 18°, miteinander einschließen und dabei eine mittlere Breite von 0,08 mm bis 0,13 mm, bevorzugt von 0,1 mm, aufweisen. Die mittlere Breite ist der arithmetische Mittelwert der Breite gemessen in unterschiedlicher Höhe. Hierdurch ist die Schraffurfläche bezüglich des Zielkonflikts Anscheuerungsresistenz versus Kontrast weiter optimierbar. Zweckmäßig ist es dabei, wenn sich benachbarte Schraffurelemente darin unterscheiden, dass die Winkel, die einander gegenüberliegende Flanken der Schraffurrippe miteinander einschließen, um mindestens 30° voneinander abweichen. Hierdurch ist eine besonders hohe Flankendichte erwirkbar.

Eine zweckmäßige Ausführungsform ist dadurch gegeben, dass zumindest eines der Schraffurelemente eine Schraffurrippe und/oder zumindest eine Quererhebung mit einem Querschnitt aufweist, der im Bereich zumindest einer Flanke einen konvex gekrümmten und/oder einen linearen und/oder einen konkav gekrümmten und/oder einen gestuften und/oder einen geknickten und/oder einen strukturierten Bereich aufweist. Besonders vorteilhaft ist es dabei, wenn sich der entsprechend geformte Bereich über eine Höhenerstreckung erstreckt, die zumindest einem Viertel der Höhe H der Schraffurrippe des Schraffurelements entspricht.

Der Querschnitt verläuft dabei außerhalb eines Kreuzungsbereichs senkrecht zur Längserstreckungsrichtung der jeweiligen Quererhebung bzw. Schraffurrippe. Hierdurch ist die Kontrastwirkung noch gezielter beeinflussbar und die Kontrastwirkung weiter erhöhbar. Der Vorteil verstärkt sich, wenn mehrere, bevorzugt alle, Schraffurrippen und/oder Quererhebungen derart ausgebildet sind.

Die Schraffurrippen und/oder die Quererhebungen können in einem Knick oder gekrümmt in den Schraffurgrund übergehen. Der Querschnitt kann symmetrisch oder asymmetrisch ausgebildet sein. Die Schraffurrippen und/oder die Quererhebungen der Schraffurelemente können einen abgeflachten Grat aufweisen. Der Grat kann ein Plateau mit einer Breite von 0,03 mm bis 0,06 mm umfassen. Der Grat kann auch Unregelmäßigkeiten in der Höhe aufweisen, die maximal 5 % der Höhe H betragen.

Unabhängig von der Ausführungsform kann die Schraffurfläche einen Schraffurgrund aufweisen, der benachbarte Schraffurrippen und/oder benachbarte Quererhebungen mittels des Schraffurgrundes voneinander trennt. Bevorzugt ist dabei ein weitgehend flächig ausgeführter Schraffurgrund.

Eine vorteilhafte Ausführungsform ist dadurch gegeben, dass zumindest ein Schraffurelement Quererhebungen aufweist, die vom Kreuzungsbereich zu einem Schraffurgrund hin kontinuierlich abfallen. Hierdurch ist bei vorteilhafter Stützwirkung der Quererhebungen gleichzeitig die Entformbarkeit weiter verbessert.

Gemäß einer weiteren bevorzugten Ausführungsform weist der Fahrzeugreifen mehrere derartige Schraffurflächen auf, die derart angeordnet sind, dass sie einen maschinenlesbaren Code, bevorzugt einen zweidimensionalen Code, besonders bevorzugt einen QR-Code, darstellen. Aufgrund der hervorragenden Kontrastwirkung der Schraffurflächen eignet sich eine solche Anordnung hervorragend zur Darstellung eines maschinenlesbaren Codes, insbesondere zur Darstellung der üblicherweise dunkel dargestellten Flächen des Codes. Die üblicherweise hell dargestellten Flächen des Codes können durch eine weitgehend unbearbeitete Oberfläche bzw. im Vergleich zur Schraffurfläche glatte Oberfläche des Fahrzeugreifens ausgebildet sein.

In einer bevorzugten Ausführungsform ist die Schraffurfläche auf einer der Seitenwände des Fahrzeugreifens ausgebildet. Hierdurch besteht eine vorteilhafte visuelle Sichtbarkeit der Schraffurfläche.

Gemäß einer weiteren bevorzugten Ausführungsform ist die Schraffurfläche am Laufstreifen des Fahrzeugreifens ausgebildet. Die Schraffurfläche kann dabei insbesondere auch auf Rillenflanken und/oder Rillengründen von im Laufstreifen verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Zweckmäßig ist es, wenn der Reifen ein Fahrzeugluftreifen ist. Es kann sich um einen Fahrzeugreifen für ein Fahrrad, für einen Personenkraftwagen, einen Van, ein SUV, einen Light-Truck, ein Nutzfahrzeug, ein Kraftrad und/oder einen Bus handeln. Besonders bevorzugt handelt es sich um einen Fahrzeugreifen für einen Personenkraftwagen. Derartige Fahrzeugreifen weisen in der Regel eine geringe Seitenwandhöhe auf. Hierdurch ist der Platz für die Anbringung von Zeichen wie Schrift oder bildliche Darstellungen in der Regel begrenzt. Für eine gute Lesbarkeit und/oder Erkennbarkeit ist somit eine hohe Kontrastwirkung besonders vorteilhaft. Es kann sich aber auch um einen Vollreifen handeln.

Die Erfindung betrifft auch ein Verfahren zur Herstellung eines Formwerkzeugs einer Vulkanisationsvorrichtung zum formgebenden Vulkanisieren eines erfindungsgemäßen Fahrzeugreifens, wobei das Formwerkzeug auf einer Formoberfläche eine zu den Schraffurelementen des Fahrzeugreifens komplementäre Negativstruktur aufweist, gemäß Anspruch 15.

Ein solches Verfahren ermöglicht eine einfache Herstellbarkeit eines Formwerkzeugs einer Vulkanisationsvorrichtung zur Erzeugung einer Schraffurfläche aufweisend ein Schraffurelement mit einer Schraffurrippe, welche zumindest am Grat von einer ersten Quererhebung überlagert wird. Wesentlich ist hierbei, dass Schritt c) erfolgt, nachdem in Schritt b) bereits die Schraffurrille erzeugt wurde. In Schritt c) erfolgt der Energieeintrag mittels des Laserstrahls somit auf der bereits in Schritt b) durch Materialabtrag abgesenkten Oberfläche des Formwerkzeugs. Im Kreuzungsbereich, insbesondere im Bereich des Rillengrundes, wird somit die Formoberfläche in Schritt c) nochmals weiter abgesenkt. Hierdurch ist auf einfache Art und Weise ein Formwerkzeug zur Verfügung gestellt, das eine formgebende Vulkanisation eines erfindungsgemäßen Fahrzeugreifens ermöglicht. Die nachgelagerte Lasergravur in Schritt c) ermöglicht es, dass die erste Quererhebung die Kontur der Schraffurrippe zumindest am Grat der Schraffurrippe überlagert.

Bei einer Lasergravur wird ein von einem Laser erzeugter Laserstrahl auf eine zu gravierende Oberfläche gerichtet. Die Gravur erfolgt mittels des durch den Laserstrahl bedingten Energieeintrags auf die Oberfläche. Hierzu werden Laserstrahl und Oberfläche in der Regel relativ zueinander bewegt, so dass der Laserstrahl abhängig von der zu gravierenden Struktur über die Oberfläche geführt wird. Durch Anpassung der Geschwindigkeit dieser Relativbewegung sowie Parametern des Laserstrahls, wie z.B) Intensität und/oder Fokus des Laserstrahls, können die resultierende gravierte Struktur als auch die Gravurzeit optimiert werden. Es kann sich um einen kontinuierlichen oder um einen gepulsten Laser handeln.

Zur Erzeugung der ersten Quervertiefung kann der Laserstrahl entlang einer oder mehrerer linienförmiger Gravurstrecken über die Oberfläche des Formwerkzeugs geführt werden. Die mehreren linienförmigen Gravurstrecken sind dabei in der Regel benachbart und weitgehend parallel zueinander angeordnet. Hierdurch kann die Breite der ersten Quervertiefung variabel gewählt werden. Der Laserstrahl kann auch mehrfach entlang derselben linienförmigen Gravurstrecke geführt werden. Hierdurch ist die Tiefe der ersten Quervertiefung einstellbar.

Eine einfache und kostengünstige Art des Materialabtrags in Schritt b) kann durch ein spanabtragendes Verfahren wie beispielsweise durch Fräsen mittels eines Fräskopfes erfolgen.

Zweckmäßig ist es, wenn zuerst alle Schraffurrillen durch Wiederholung von Schritt b) erzeugt werden und dann nachgelagert die ersten Quervertiefungen durch Wiederholung von Schritt c) erzeugt werden. Dies ist v.a) dann vorteilhaft, wenn in Schritt b) ein spanabtragendes Verfahren, also ein zur Lasergravur verschiedenes Verfahren, zum Einsatz kommt.

Der Materialabtrag in Schritt b) kann aber auch durch Lasergravur erfolgen. Vorteilhaft hieran ist, dass Schritt b) und Schritt c) mit dem gleichen Laser oder zumindest an der gleichen Produktionsmaschine erzeugt werden können.

Eine bevorzugte Ausführungsform des Verfahrens ist dadurch gegeben, dass in Schritt c) der Laserstrahl zur Erzeugung der ersten Querrille entlang zumindest einer linienförmigen Gravurstrecke geführt wird und dass der Laserstrahl dabei mit konstanter Geschwindigkeit und/oder konstanter Intensität des Laserstrahls entlang der jeweiligen zumindest einen linienförmigen Gravurstrecke geführt wird. Dies ermöglicht eine besonders einfache Fertigung der Negativform der überlagernden ersten Quererhebung, da die Steuerung des Laserstrahls nicht exakt auf die Position der Kreuzung der Gravurstrecke mit dem Rillengrund abgestimmt werden muss.

Weitere Merkmale, Vorteile und Einzelheiten der Erfindung werden nun anhand der Zeichnungen, die schematisch Ausführungsbeispiele der Erfindung darstellen, näher beschrieben. Dabei zeigen
Fig. 1 einen Fahrzeugreifen aufweisend eine Schraffurfläche;
Fig. 2 ein Schraffurelement;
Fig. 3 bis 5 Beispiele von Schraffurflächen, wobei die Figuren 4b-4e erfindungsgemäße Ausführungsformen darstellen und die Figuren 4a und 5 lediglich zum besseren Verständnis der Erfindung beitragen sollen;
Fig. 6 Beispiele von Querschnitten von Schraffurrippen.

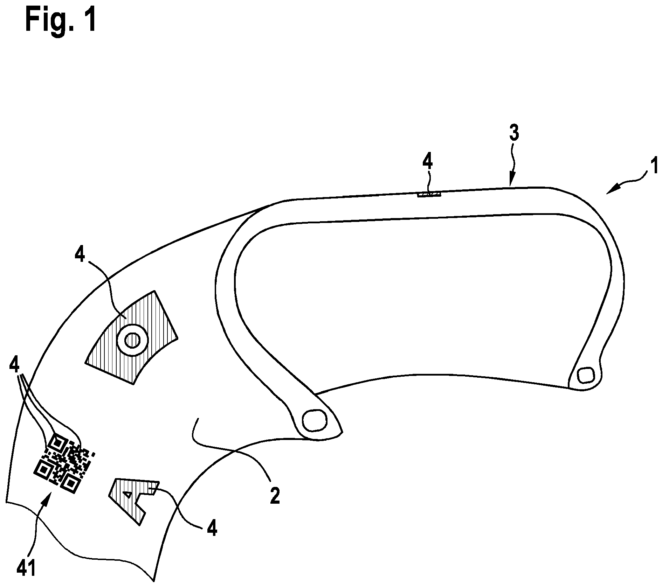

Die Figur 1 zeigt beispielhaft einen Fahrzeugluftreifen 1 mit Seitenwänden 2 und einem Laufstreifen 3 und mit zumindest einer Schraffurfläche 4 auf zumindest einer der Seitenwände 2 und/oder dem Laufstreifen 3. Bei einer Anordnung am Laufstreifen 3 kann die Schraffurfläche 4 dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein. Bevorzugt handelt es sich um einen Reifen für einen Personenkraftwagen. Es kann sich aber auch um einen anderen Fahrzeugreifen, insbesondere für ein Fahrrad, einen Van, ein SUV, einen Light-Truck, ein Nutzfahrzeug, ein Kraftrad und/oder einen Bus, handeln.

Die Schraffurfläche 4 weist zumindest zwei nebeneinander verlaufende Schraffurelemente 5 auf, wobei die Schraffurelemente 5 jeweils eine Schraffurrippe 51 mit einem Grat 18 sowie einander gegenüberliegenden Flanken 14 aufweisen. Weiter weisen die Schraffurelemente 5 zudem jeweils Quererhebungen 53 mit einem Grat 54 sowie mit einander gegenüberliegenden Flanken 14 auf, wobei die Quererhebungen 53 dabei die jeweilige Schraffurrippe 51 kreuzend angeordnet sind, wodurch sich die Grate 54 der Quererhebungen und der Grat 18 der jeweiligen Schraffurrippe in der Draufsicht kreuzen. Bedeutend ist, dass jede der Quererhebungen 53 genau eine Schraffurrippe 51 kreuzt und dass zumindest eine erste Quererhebung 53 der Quererhebungen jedes der Schraffurelemente 5 eine Kontur der Schraffurrippe 51 des jeweiligen Schraffurelements zumindest am Grat 18 der Schraffurrippe 51 überlagert.

Derartige Schraffurflächen 4 eignen sich hervorragend zur Darstellung eines Codes 41, insbesondere eines zweidimensionalen Codes wie beispielsweise eines QR-Codes 41.

Hierbei können die üblicherweise dunkel dargestellten Flächen des Codes als Schraffurflächen 4 ausgebildet sein.

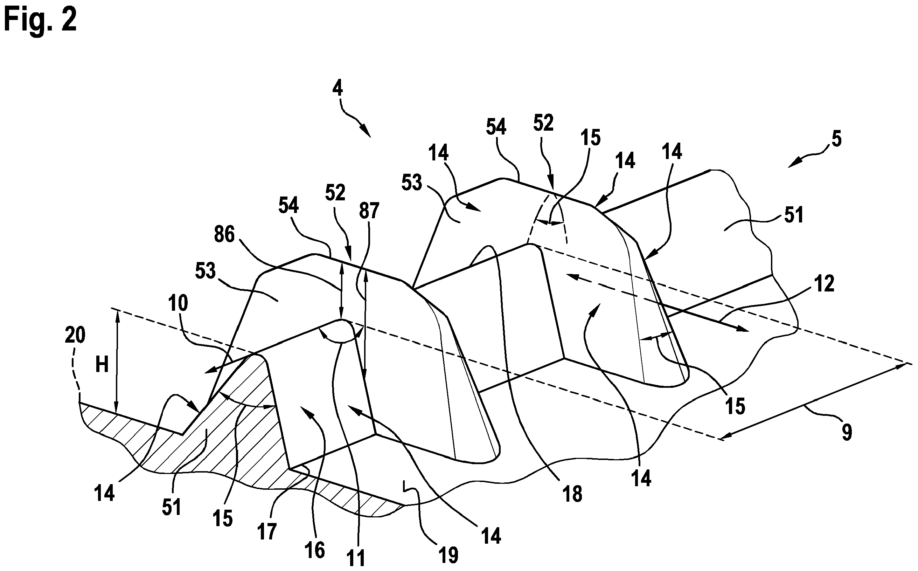

Die Figur 2 zeigt ein einzelnes für eine derartige Schraffurfläche 4 geeignetes Schraffurelement 5. Exemplarisch sind in der Darstellung alle Quererhebungen als erste Quererhebungen 53 ausgeführt. Jede der ersten Quererhebungen 53 erstreckt sich dabei auch auf beiden Seiten eine Grates 18 der jeweiligen Schraffurrippe 51. Die Quererhebungen 53 können quer zur Längserstreckungsrichtung 10 der Schraffurrippe 51 eine Längserstreckung aufweisen, die größer ist als ihre Erstreckung in einer dazu senkrechten Richtung.

Das Höhenprofil des Schraffurelements 5 weist im Kreuzungsbereich 52 eine größere Höhe auf als durch die Höhe des Grates 18 der Schraffurrippe 51 gegeben ist. Hierdurch ist, insbesondere im jeweiligen Kreuzungsbereich 52, ein lokales Maximum des Schraffurelements 5 erreichbar, wodurch eine stark verbesserten Kontrastwirkung erreichbar ist.

Die zumindest eine erste Quererhebung 53 kann dabei der Kontur der jeweiligen Schraffurrippe 51 folgen. Die Schraffurrippen 51 können eine Höhe H von 0,1 mm bis 0,8 mm, bevorzugt von 0,2 mm bis 0,5 mm, besonders bevorzugt von 0,25 mm bis 0,35 mm, aufweisen, wobei die Höhe H gemittelt ist entlang der Längserstreckung der jeweiligen Schraffurrippe 51. Die Höhe H kann bevorzugt gemessen sein relativ zu einem Niveau 20, das einem mittleren Niveau eines Schraffurgrundes 19 entspricht. Das Niveau 20 kann auch einem Basisniveau entsprechen, welches beispielsweise von einem Teil der Außenfläche des Fahrzeugreifens, insbesondere einem Boden einer auf der Oberfläche des Reifens ausgebildeten flachen Vertiefung, welche die Schraffurfläche 4 aufweisen kann, gebildet ist.

Beispielhaft kann zumindest eine der ersten Quererhebungen 53 die Kontur der jeweiligen Schraffurrippe 51 am Grat 18 der Schraffurrippe um eine Überlagerungshöhe 86 von 0,05 mm bis 0,3 mm, bevorzugt von 0,1 mm bis 0,2 mm, überlagern. Die Höhe der Überlagerungshöhe 86 ist jeweils gemessen senkrecht zur flächigen Erstreckung der Schraffurfläche 4. Die Überlagerungshöhe 86 kann aber auch 0,1 mm bis 0,4 mm, bevorzugt 0,2 mm bis 0,3 mm, betragen. Für jede der genannten Überlagerungshöhen 86 ist eine Höhe H der Schraffurrippe von 0,1 mm bis 0,8 mm, bevorzugt von 0,2 mm bis 0,5 mm, besonders bevorzugt von 0,25 mm bis 0,35 mm, vorteilhaft.

Weiter kann zumindest eine der ersten Quererhebungen 53 die Kontur der jeweiligen Schraffurrippe 51 zumindest im Bereich der Flanken 14 der Schraffurrippe um eine Überlagerungshöhe 87 von 0,1mm bis 0,7mm, bevorzugt 0,2mm bis 0,5mm, überlagern. Die Überlagerungshöhe 87 ist gemessen senkrecht zur flächigen Erstreckung der Schraffurfläche 4.

Das dargestellte Schraffurelement 5 kann zumindest zwei benachbarte erste Quererhebungen 53 aufweisen, die in einem Abstand 9 von 0,2 mm bis 0,5 mm, bevorzugt von 0,25 mm bis 0,35 mm, angeordnet sind. Der Abstand 9 kann gemessen sein zwischen den Kreuzungen der Grate 54 der Quererhebungen mit dem Grat 18 der Querrippe 51 in der Draufsicht. Bevorzugt weisen alle erste Quererhebungen 53 in etwa den gleichen Abstand 9 auf.

Eine Längserstreckungsrichtung 10 der Schraffurrippe 51 schließt einen Winkel 11 von 30° bis 90°, bevorzugt von 45° bis 90°, besonders bevorzugt von 60° bis 90°, mit einer jeweiligen Längserstreckungsrichtung 12 der sie kreuzenden ersten Quererhebungen 53 ein. Dargestellt ist jeweils ein Winkel 11 von in etwa 90°. Die Quererhebungen 53 des Schraffurelements 5 können, wie dargestellt, weitgehend parallel zueinander ausgerichtet sein.

Die Schraffurrippe 51 weist einander gegenüberliegende Flanken 14 auf, die einen Winkel 15 von mindestens 50°, bevorzugt von 55° bis 65°, miteinander einschließen können. Die ersten Quererhebungen 53 weisen jeweils einander gegenüberliegende Flanken 14 auf, die einen Winkel 15 von 4° bis 20°, bevorzugt von 12° bis 18°, miteinander einschließen können. Besonders vorteilhaft ist es dabei, wenn die einander gegenüberliegenden Flanken einen jeweiligen derartigen Winkel über eine Höhenerstreckung aufweisen, die zumindest einem Viertel der Höhe H der Schraffurrippe entspricht.

Es können aber auch sowohl die Schraffurrippe 51 als auch die die ersten Quererhebungen 53 jeweils einander gegenüberliegende Flanken 14 aufweisen, die einen Winkel 15 von 4° bis 20°, bevorzugt von 12° bis 18°, miteinander einschließen.

Die dargestellten Schraffurrippen 51 und/oder die ersten Quererhebungen 53 können einen Querschnitt aufweisen, der im Bereich zumindest einer Flanke einen Bereich 16 aufweist, der weitgehend linear verläuft. Dieser kann wie gezeigt in einem Knick 17 oder auch gekrümmt in den Schraffurgrund 19 übergehen. Die Schraffurfläche 4 kann einen Schraffurgrund 19 aufweisen, der benachbarte Schraffurelemente 5 und/oder benachbarte Quererhebungen 53 voneinander trennt. Die Schraffurrippen 51 und/oder die ersten Quererhebungen 53 der Schraffurelemente 5 können auch einen abgeflachten Grat 18, 54 aufweisen. Der Grat kann ein Plateau mit einer Breite von 0,03 mm bis 0,06 mm umfassen.

Zweckmäßig ist es, wenn mehrere, beispielsweise mindestens 50% oder mindestens 80%, bevorzugt alle, der Quererhebungen der Schraffurfläche als erste Quererhebungen 53 ausgebildet sind.

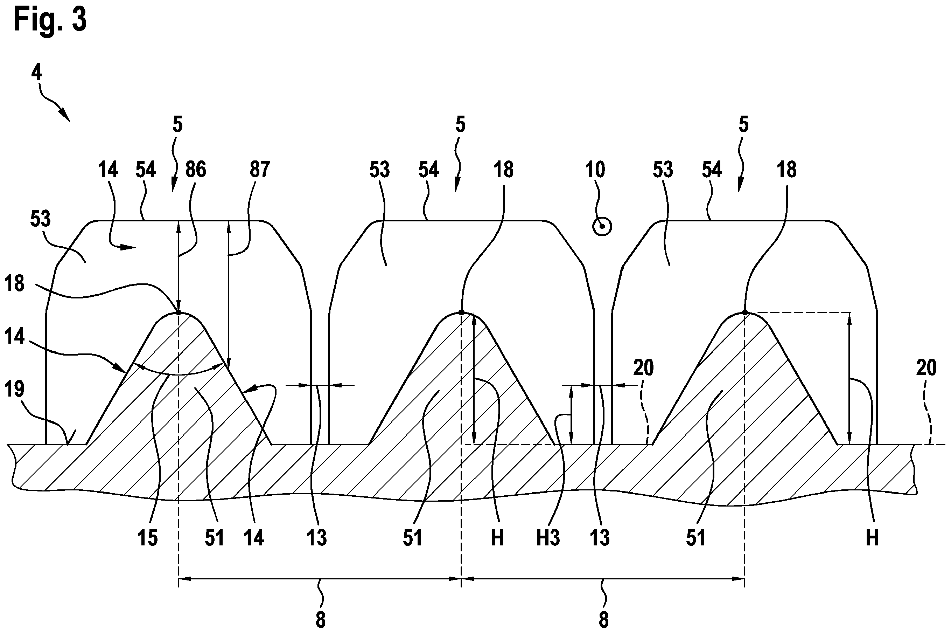

Die Figur 3 zeigt einen Querschnitt durch eine erfindungsgemäße Schraffurfläche 4 aufweisend mehrere nebeneinander und weitgehend parallel zueinander angeordnete Schraffurelemente 5. Es kann sich um mehrere Schraffurelement 5 wie in der Figur 2 beschrieben handeln. Die Schraffurelemente 5 können aber auch davon verschieden ausgebildet sein. Mindestens 50%, bevorzugt 80%, der Quererhebungen der Schraffurfläche 4 können als erste Quererhebungen 53 ausgeführt sein. Es kann sich um die im Rahmen der Figur 1 vorbeschriebene Schraffurfläche 4 handeln.

Der Abstand 8 der benachbarten Schraffurelemente 5 kann 0,4 mm bis 1,0 mm, bevorzugt 0,5 mm bis 0,7 mm, besonders bevorzugt 0,55 mm bis 0,60 mm, betragen. Der Abstand 8 kann dabei gemessen sein zwischen den Graten 18 der Schraffurrippen 51 in der Draufsicht. Der lichte Abstand 13 zwischen den Quererhebungen 53 benachbarter Schraffurelemente 5 kann mindestens 10 %, bevorzugt von mindestens 13%, des Abstandes 8 der benachbarten Schraffurelemente 5 betragen. Der lichte Abstand 13 ist dabei gemessen senkrecht zur Längserstreckungsrichtung 10 der Schraffurelemente 51. Der lichte Abstand ist gemessen auf einer Höhe H3, welche 1/3 des Mittelwerts der Höhen H der Schraffurrippen 51 der jeweils benachbarten Schraffurelemente 5 betragen kann.

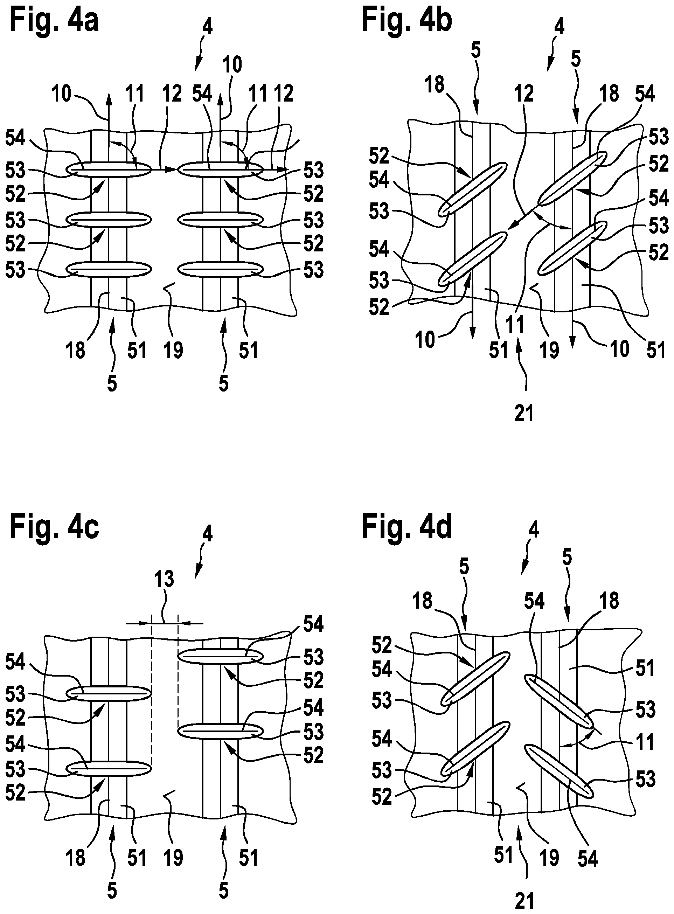

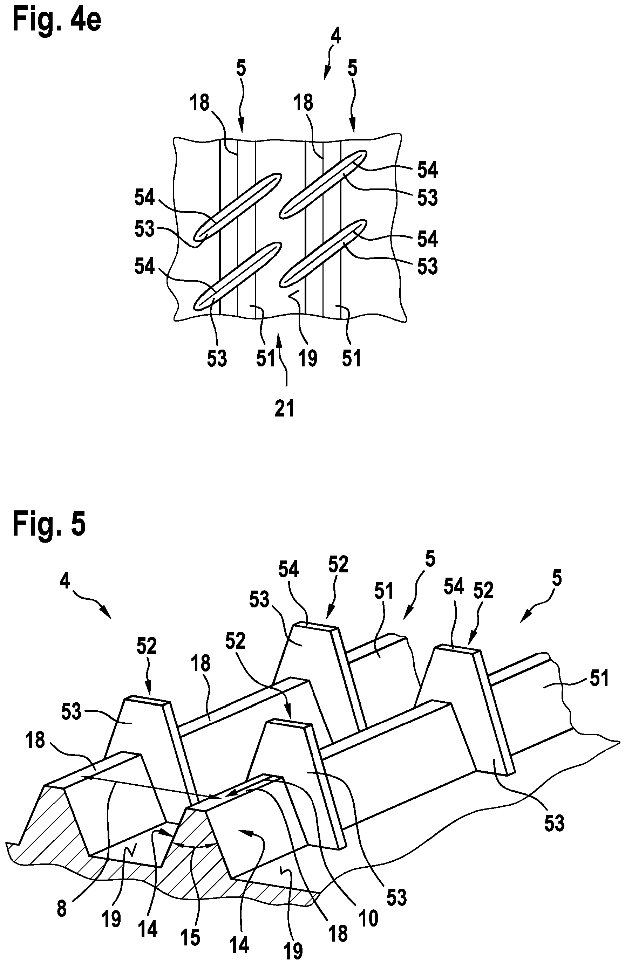

Die Figur 4 zeigt Beispiele für eine Draufsicht auf eine Schraffurfläche 4. Die Schraffurfläche 4 kann ganz oder teilweise wie die in der Figur 3 ausgebildete Schraffurfläche 4 ausgebildet sein.

Die Figur 4a zeigt ein nicht erfindungsgemäßes Beispiel, in dem der Winkel 11 in etwa 90° beträgt Weiter weist die Schraffurfläche 4 zumindest zwei benachbarte Schraffurelemente 5 auf, deren Quererhebungen 53 weitgehend parallel zueinander ausgerichtet sind. In der Draufsicht verlaufen dabei die Grate 54 der Quererhebungen 53 des einen benachbarten Schraffurelements 5 in ihrer Verlängerung innerhalb der Quererhebungen des anderen Schraffurelements, bevorzugt weitgehend deckungsgleich mit den Graten der Quererhebungen des anderen benachbarten Schraffurelements 5. Die Figur 4b zeigt ein Beispiel, das sich von dem in der Fig. 4a gezeigten Beispiel darin unterscheidet, dass die Winkel 11 kleiner als 90°, insbesondere in etwa 45°, sind.

Die Fig. 4c zeigt ein Beispiel, wobei die Schraffurfläche 4 zumindest zwei benachbarte Schraffurelemente 5 aufweist, deren Quererhebungen 53 parallel zueinander ausgerichtet sind. Die Quererhebungen 53 des einen benachbarten Schraffurelements 5 sind relativ zu den Quererhebungen 53 des anderen benachbarten Schraffurelements 5 versetzt, bevorzugt mittig versetzt, angeordnet. In der Draufsicht sind somit die Grate 54 der Quererhebungen des einen benachbarten Schraffurelements 5 in ihrer Verlängerung zwischen den Graten der Quererhebungen 53 des anderen benachbarten Schraffurelements 5 angeordnet. Mittig versetzt angeordnet bedeutet dabei, dass die Grate 54 der Quererhebungen des einen benachbarten Schraffurelements 5 in ihrer Verlängerung weitgehend mittig zwischen den Graten 54 der Quererhebungen des anderen benachbarten Schraffurelements 5 angeordnet sind. Bevorzugt können die Quererhebungen 53 der benachbarten Schraffurelemente 5 einen lichten Abstand 13 wie in der Figur 3 gezeigt aufweisen.

Die Fig. 4d zeigt ein Beispiel für eine Schraffurfläche 4, bei dem die Schraffurfläche 4 zumindest zwei benachbarte Schraffurelemente 5 aufweist, wobei die Längserstreckungsrichtung 12 der Quererhebungen 53 des einen Schraffurelements 5 relativ zu der Längserstreckungsrichtung 12 der Quererhebungen 53 des anderen Schraffurelements 5 in einem Bereich zwischen den beiden Schraffurelementen von ihrem jeweiligen Kreuzungsbereich 52 aus gesehen eine in die gleiche Erstreckungsrichtung des Bereichs 21 zwischen den Schraffurelementen ausgerichtete Komponente aufweisen.

In der Figur 4b und 4e hingegen weisen sie eine in entgegengesetzte Richtung weisende Komponente auf. Die Fig. 4e zeigt zudem ein Beispiel dafür, dass bei einer Anordnung ohne lichten Abstand eine dichte Anordnung der Schraffurelemente 5 ermöglicht ist.

Die Fig. 5 zeigt einen Querschnitt einer Aufsicht einer Schraffurfläche 4. Es kann sich um die in der Fig. 4a dargestellte, nicht erfindungsgemäße Schraffurfläche 4 mit abgeflachten Graten 18, 54 handeln.

Die in den Figuren 1 bis 5 dargestellten Schraffurflächen 4 einer Oberfläche 3,2 eines Fahrzeugreifens 1 können durch formgebendes Vulkanisieren des Fahrzeugreifens hergestellt werden. Hierzu wird ein Reifenrohling in einer Vulkanisiervorrichtung formgebend vulkanisiert. Die Vulkanisiervorrichtung umfasst dabei ein Formwerkzeug das auf einer Formoberfläche eine zu den Schraffurelementen 5 des Fahrzeugreifens 1 komplementäre Negativstruktur aufweist. Eine derartiges Formwerkzeug kann vorteilhaft hergestellt werden durch ein Verfahren umfassend zumindest die folgenden Schritte: a) Bereitstellen eines Formwerkzeugs aufweisend eine Formoberfläche; b) Erzeugen einer Schraffurrille auf der Formoberfläche des Formwerkzeugs durch Materialabtrag, wobei die Schraffurrille als zu einer Schraffurrippe 51 eines der Schraffurelemente 5 komplementäre Negativstruktur ausgebildet ist und einen zum Grat 18 der Schraffurrippe komplementären Rillengrund aufweist; c) Erzeugen einer ersten Quervertiefung auf der Formoberfläche des Formwerkzeugs, wobei die erste Quervertiefung als zur ersten Quererhebung 53 des Schraffurelements 5 komplementäre Negativstruktur ausgebildet ist und wobei die erste Quervertiefung den Rillengrund der Schraffurrille kreuzt; wobei das Erzeugen der ersten Quervertiefung durch Lasergravur durch Energieeintrag mittels eines Laserstrahls erfolgt und wobei der Energieeintrag im Kreuzungsbereich auch im Bereich der zuvor in Schritt b durch Materialabtrag erzeugten Schraffurrille, insbesondere im Bereich des Rillengrundes, erfolgt.

Besonders einfach ist das Verfahren, wenn in Schritt c der Laserstrahl zur Erzeugung der ersten Querrille entlang zumindest einer linienförmigen Gravurstrecke geführt wird und dass der Laserstrahl dabei mit konstanter Geschwindigkeit und/oder konstanter Intensität des Laserstrahls entlang der jeweiligen zumindest einen linienförmigen Gravurstrecke geführt wird.

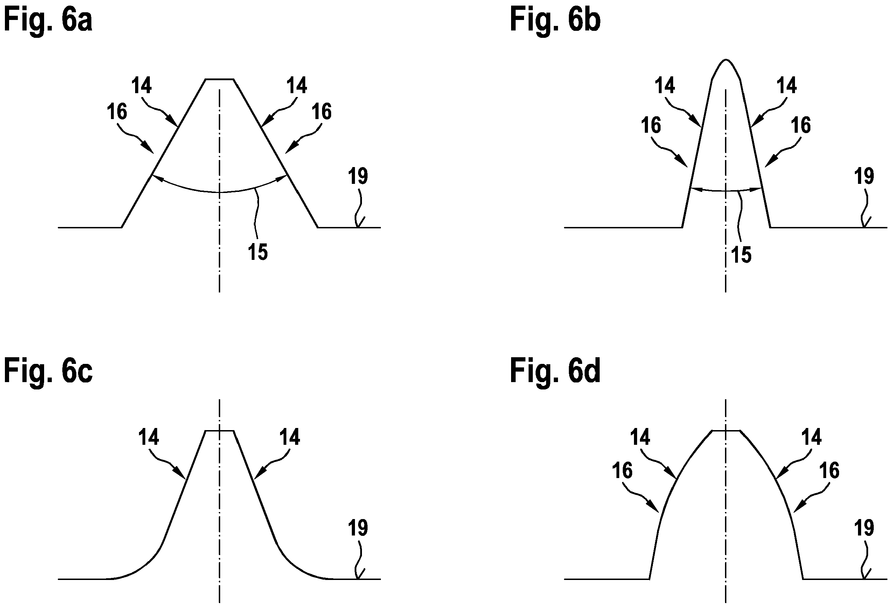

Die Figuren 6a bis 6g zeigen Beispiele für Querschnitte der Schraffurrippen 51 und/oder der Quererhebungen 53 eines Schraffurelements. Der Querschnitt verläuft dabei jeweils außerhalb eines Kreuzungsbereichs 52 senkrecht zur Längserstreckungsrichtung der jeweiligen Quererhebung 53 bzw. Schraffurrippe 51. Die Querschnitte eignen sich für die in den Figuren 1 bis 5 dargestellten Schraffurbereiche 4.

Die Fig. 6a zeigt einen Querschnitt, der im Bereich der Flanken 14 einen linear verlaufenden Bereich 16 aufweist. Die Flanken 14 liegen einander gegenüber und können einen Winkel 15 von mindestens 50°, bevorzugt von 55° bis 65°, miteinander einschließen. Die Flanken 14 gehen in einem Knick in den flächigen Schraffurgrund 19 über. Die Fig. 6b zeigt einen entsprechenden Querschnitt, wobei die Flanken 14 einen Winkel 15 von von 4° bis 20°, bevorzugt von 12° bis 18°, miteinander einschließen. Die Fig. 6c zeigt exemplarisch, dass die Flanken 14, unabhängig von der genauen Ausgestaltung des Querschnitts, auch mit einer Krümmung in den Schraffurgrund 19 übergehen können.

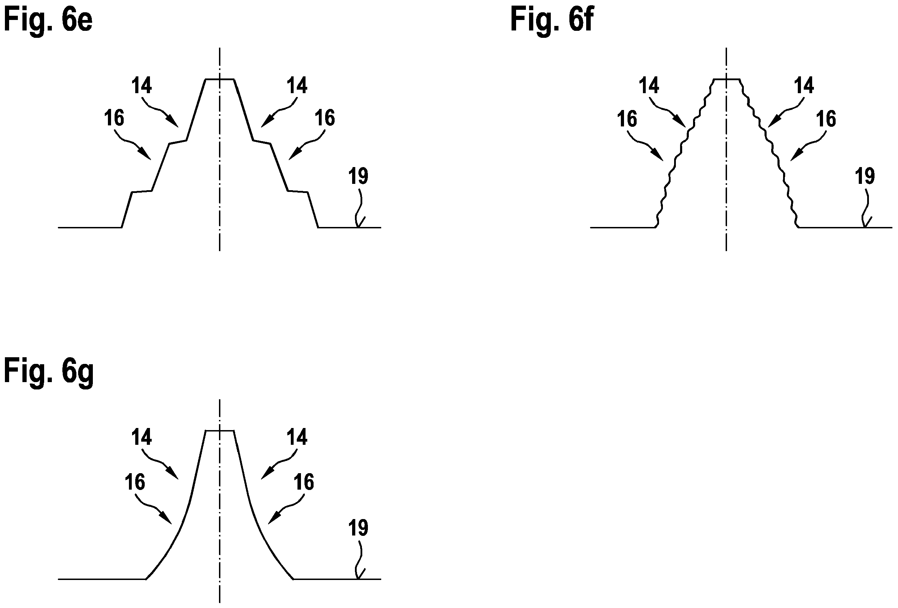

Die Fig. 6d zeigt einen Querschnitt, der im Bereich der Flanken 14 einen konvex gekrümmten Bereich 16 aufweist. Die Fig. 6e zeigt einen Querschnitt, der im Bereich der Flanken 14 einen gestuften Bereich 16 aufweist. Die Fig. 6f zeigt einen Querschnitt, der im Bereich der Flanken 14 einen strukturierten Bereich 16 aufweist. Die Fig. 6g zeigt einen Querschnitt, der im Bereich der Flanken 14 einen konkav gekrümmten Bereich 16 aufweist.

In allen Figuren 6a bis 6g kann sich der entsprechend ausgeformte Bereich 16 über zumindest ein Viertel der Höhe H der Schraffurrippe des entsprechenden Schraffurelements erstrecken.

### Bezugszeichenliste

- 1: Fahrzeugreifen
- 2: Seitenwand
- 3: Laufstreifen
- 4: Schraffurfläche
- 41: zweidimensionaler Code
- 5: Schraffurelement
- 51: Schraffurrippe
- 52: Kreuzungsbereich
- 53: erste Quererhebung
- 54: Grat einer Quererhebung
- 8: Abstand von Schraffurrippen
- 9: Abstand von Kreuzungsbereichen
- 10: Längserstreckungsrichtung einer Schraffurrippe
- 11: Winkel
- 12: Längserstreckungsrichtung einer Quererhebung
- 13: lichter Abstand
- 14: einander gegenüberliegende Flanken
- 15: Flankenwinkel
- 16: Bereich
- 17: geknickter Bereich
- 18: Grat einer Schraffurrippe
- 19: Schraffurgrund
- 20: Niveau
- 21: Bereich
- 86, 87: Überlagerungshöhe
- H: Höhe einer Schraffurrippe
- H3: Höhe

## Patentansprüche

1. Fahrzeugreifen (1) mit Seitenwänden (2) und einem Laufstreifen (3) und mit zumindest einer Schraffurfläche (4) auf einer äußeren Oberfläche (2,3), insbesondere auf einer der Seitenwände (2) und/oder dem Laufstreifen (3), wobei die Schraffurfläche (4) nebeneinander angeordnete Schraffurelemente (5) aufweist, wobei die Schraffurelemente (5) jeweils eine Schraffurrippe (51) mit einem Grat (18) sowie einander gegenüberliegenden Flanken (14) aufweisen,
wobei die Schraffurelemente (5) zudem jeweils Quererhebungen (53) mit einem Grat (54) sowie mit einander gegenüberliegenden Flanken (14) aufweisen,
wobei die Quererhebungen (53) dabei die jeweilige Schraffurrippe (51) kreuzend angeordnet sind, wodurch sich die Grate (54) der Quererhebungen und der Grat (18) der jeweiligen Schraffurrippe in der Draufsicht kreuzen,
wobei jede der Quererhebungen (53) genau eine Schraffurrippe (51) kreuzt und wobei zumindest eine erste Quererhebung (53) der Quererhebungen jedes der Schraffurelemente (5) eine Kontur der Schraffurrippe (51) des jeweiligen Schraffurelements zumindest am Grat (18) der Schraffurrippe (51) überlagert,
**dadurch gekennzeichnet, dass**
die Schraffurfläche (4) zumindest zwei benachbarte Schraffurelemente (5) aufweist, deren Quererhebungen (53) weitgehend parallel zueinander ausgerichtet sind und dass die Quererhebungen (53) des einen benachbarten Schraffurelements (5) relativ zu den Quererhebungen (53) des anderen benachbarten Schraffurelements (5) versetzt angeordnet sind.

2. Fahrzeugreifen (1) nach Anspruch 1, **dadurch gekennzeichnet, dass** zumindest eine der Schraffurrippen (51) eine Höhe H von 0,1 mm bis 0,8 mm, bevorzugt von 0,2 mm bis 0,5 mm, besonders bevorzugt von 0,25 mm bis 0,35 mm, aufweist.

3. Fahrzeugreifen (1) nach Anspruch 1 oder 2, **dadurch gekennzeichnet, dass** zumindest eine der ersten Quererhebungen (53) die Kontur der jeweiligen Schraffurrippe (51) am Grat (18) der Schraffurrippe um eine Überlagerungshöhe (86) von 0,05 mm bis 0,3 mm, bevorzugt von 0,1 mm bis 0,2 mm, überlagert.

4. Fahrzeugreifen (1) nach Anspruch 1 oder 2, **dadurch gekennzeichnet, dass** zumindest eine der ersten Quererhebungen (53) die Kontur der jeweiligen Schraffurrippe (51) am Grat (18) der Schraffurrippe um eine Überlagerungshöhe (86) von 0,1 mm bis 0,4 mm, bevorzugt 0,2 mm bis 0,3 mm, überlagert.

5. Fahrzeugreifen (1) nach zumindest einem der vorhergehenden Ansprüche, **dadurch gekennzeichnet, dass** zumindest eine der ersten Quererhebungen (53) die Kontur der jeweiligen Schraffurrippe (51) zumindest im Bereich der Flanken (14) der Schraffurrippe um eine Überlagerungshöhe (87) von 0,1mm bis 0,7mm, bevorzugt 0,2mm bis 0,5mm, überlagert.

6. Fahrzeugreifen (1) nach zumindest einem der vorhergehenden Ansprüche, **dadurch gekennzeichnet, dass** die Quererhebungen (53) des einen benachbarten Schraffurelements (5) relativ zu den Quererhebungen (53) des anderen benachbarten Schraffurelements (5) mittig versetzt angeordnet sind.

7. Fahrzeugreifen (1) nach zumindest einem der vorhergehenden Ansprüche, **dadurch gekennzeichnet, dass** die Schraffurrippen (51) der Schraffurelemente (5) mit einem Abstand (8) von 0,4 mm bis 1,0 mm, bevorzugt von 0,5 mm bis 0,7 mm, besonders bevorzugt von 0,55 mm bis 0,60 mm, angeordnet sind.

8. Fahrzeugreifen (1) nach zumindest einem der vorhergehenden Ansprüche, **dadurch gekennzeichnet, dass** zumindest eines der Schraffurelemente (5) zumindest zwei benachbarte erste Quererhebungen (53) aufweist, die in einem Abstand (9) von 0,2 mm bis 0,5 mm, bevorzugt von 0,25 mm bis 0,35 mm, angeordnet sind.

9. Fahrzeugreifen (1) nach zumindest einem der vorhergehenden Ansprüche, **dadurch gekennzeichnet, dass** eine Längserstreckungsrichtung (10) zumindest einer der Schraffurrippen (51) einen Winkel (11) von 30° bis 90°, bevorzugt von 45° bis 90°, besonders bevorzugt von 60° bis 90°, mit einer jeweiligen Längserstreckungsrichtung (12) der sie kreuzenden ersten Quererhebungen (53) einschließt.

10. Fahrzeugreifen (1) nach zumindest einem der vorhergehenden Ansprüche, **dadurch gekennzeichnet, dass** die Schraffurfläche (4) zumindest zwei benachbarte Schraffurelemente (5) aufweist, wobei die Längserstreckungsrichtung (12) der Quererhebungen (53) des einen Schraffurelements (5) relativ zu der Längserstreckungsrichtung (12) der Quererhebungen (53) des anderen Schraffurelements (5) in einem Bereich (21) zwischen den beiden Schraffurelementen (5) eine in die gleiche oder in die gegenläufige Erstreckungsrichtung des Bereichs ausgerichtete Komponente aufweisen.

11. Fahrzeugreifen (1) nach zumindest einem der vorhergehenden Ansprüche, **dadurch gekennzeichnet, dass** die Schraffurfläche (4) zumindest zwei benachbarte Schraffurelemente (5) aufweist, zwischen deren Quererhebungen (53) ein lichter Abstand (13) von 5 % bis 40 %, bevorzugt von 10 % bis 25 %, besonders bevorzugt von 13% bis 20 %, des Abstandes (8) der Schraffurrippen (51) der benachbarten Schraffurelemente (5) besteht.

12. Fahrzeugreifen (1) nach zumindest einem der vorhergehenden Ansprüche, **dadurch gekennzeichnet, dass** zumindest eines der Schraffurelemente (5) derart ausgebildet ist, dass die Schraffurrippe (51) des Schraffurelements (5) einander gegenüberliegende Flanken (14) aufweist, die einen Winkel (15) von mindestens 50°, bevorzugt von 55° bis 65°, miteinander einschließen.

13. Fahrzeugreifen (1) nach zumindest einem der vorhergehenden Ansprüche, **dadurch gekennzeichnet, dass** zumindest eines der Schraffurelemente (5) eine Schraffurrippe (51) und/oder eine erste Quererhebung (53) mit jeweils einander gegenüberliegenden Flanken (14) aufweist, die einen Winkel (15) von 4° bis 20°, bevorzugt von 12° bis 18°, miteinander einschließen.

14. Fahrzeugreifen (1) nach zumindest einem der vorhergehenden Ansprüche, **dadurch gekennzeichnet, dass** der Fahrzeugreifen (1) mehrere Schraffurflächen (4) aufweist, die derart angeordnet sind, dass sie einen maschinenlesbaren Code (41), bevorzugt einen zweidimensionalen Code (41), besonders bevorzugt einen QR-Code (41), darstellen.

15. Verfahren zur Herstellung eines Formwerkzeugs einer Vulkanisationsvorrichtung zum formgebenden Vulkanisieren eines Fahrzeugreifens (1),
wobei der Fahrzeugreifen (1) Seitenwände (2) und einen Laufstreifen (3) und zumindest eine Schraffurfläche (4) auf einer äußeren Oberfläche (2,3), insbesondere auf einer der Seitenwände (2) und/oder dem Laufstreifen (3), aufweist,
wobei die Schraffurfläche (4) nebeneinander angeordnete Schraffurelemente (5) aufweist, wobei die Schraffurelemente (5) jeweils eine Schraffurrippe (51) mit einem Grat (18) sowie einander gegenüberliegenden Flanken (14) aufweisen, wobei die Schraffurelemente (5) zudem jeweils Quererhebungen (53) mit einem Grat (54) sowie mit einander gegenüberliegenden Flanken (14) aufweisen,
wobei die Quererhebungen (53) dabei die jeweilige Schraffurrippe (51) kreuzend angeordnet sind, wodurch sich die Grate (54) der Quererhebungen und der Grat (18) der jeweiligen Schraffurrippe in der Draufsicht kreuzen,
wobei jede der Quererhebungen (53) genau eine Schraffurrippe (51) kreuzt und wobei zumindest eine erste Quererhebung (53) der Quererhebungen jedes der Schraffurelemente (5) eine Kontur der Schraffurrippe (51) des jeweiligen Schraffurelements zumindest am Grat (18) der Schraffurrippe (51) überlagert,
wobei das Formwerkzeug auf einer Formoberfläche eine zu den Schraffurelementen (5) des Fahrzeugreifens (1) komplementäre Negativstruktur aufweist, wobei das Verfahren zumindest die folgenden Schritte in der dargelegten Reihenfolge aufweist:
a) Bereitstellen eines Formwerkzeugs aufweisend eine Formoberfläche;
b) Erzeugen einer Schraffurrille auf der Formoberfläche des Formwerkzeugs durch Materialabtrag, wobei die Schraffurrille als zu einer Schraffurrippe (51) eines der Schraffurelemente (5) komplementäre Negativstruktur ausgebildet ist und einen zum Grat (18) der Schraffurrippe komplementären Rillengrund aufweist;
c) Erzeugen einer ersten Quervertiefung auf der Formoberfläche des Formwerkzeugs, wobei die erste Quervertiefung als zur ersten Quererhebung (53) des Schraffurelements (5) komplementäre Negativstruktur ausgebildet ist und wobei die erste Quervertiefung den Rillengrund der Schraffurrille kreuzt; wobei das Erzeugen der ersten Quervertiefung durch Lasergravur durch Energieeintrag mittels eines Laserstrahls erfolgt und wobei der Energieeintrag im Kreuzungsbereich auch im Bereich der zuvor in Schritt b) durch Materialabtrag erzeugten Schraffurrille, insbesondere im Bereich des Rillengrundes, erfolgt.

16. Verfahren gemäß Anspruch 15, **dadurch gekennzeichnet, dass** in Schritt c) der Laserstrahl zur Erzeugung der ersten Querrille entlang zumindest einer linienförmigen Gravurstrecke geführt wird und dass der Laserstrahl dabei mit konstanter Geschwindigkeit und/oder konstanter Intensität des Laserstrahls entlang der jeweiligen zumindest einen linienförmigen Gravurstrecke geführt wird.

## Claims

1. Vehicle tyre (1) having side walls (2) and having a tread (3) and having at least one hatching area (4) on an outer surface (2, 3), in particular on one of the side walls (2) and/or on the tread (3), wherein the hatching area (4) has hatching elements (5) arranged one next to the other, wherein the hatching elements (5) each have a hatching rib (51) with a ridge (18) and with mutually opposite flanks (14),
wherein the hatching elements (5) moreover each have transverse elevations (53) with a ridge (54) and with mutually opposite flanks (14),
wherein the transverse elevations (53) are in this case arranged in a manner crossing the respective hatching rib (51) whereby, in plan view, the ridges (54) of the transverse elevations and the ridge (18) of the respective hatching rib cross, wherein each of the transverse elevations (53) crosses exactly one hatching rib (51), and wherein at least one first transverse elevation (53) of the transverse elevations of each of the hatching elements (5) overlies a contour of the hatching rib (51) of the respective hatching element at least at the ridge (18) of the hatching rib (51),
**characterized in that**
the hatching area (4) has at least two adjacent hatching elements (5), the transverse elevations (53) of which are oriented largely parallel to one another, and **in that** the transverse elevations (53) of one adjacent hatching element (5) are arranged offset relative to the transverse elevations (53) of the other adjacent hatching element (5).

2. Vehicle tyre (1) according to Claim 1, **characterized in that** at least one of the hatching ribs (51) has a height H of 0.1 mm to 0.8 mm, preferably of 0.2 mm to 0.5 mm, particularly preferably of 0.25 mm to 0.35 mm.

3. Vehicle tyre (1) according to Claim 1 or 2, **characterized in that** at least one of the first transverse elevations (53) overlies the contour of the respective hatching rib (51) at the ridge (18) of the hatching rib by an overlying height (86) of 0.05 mm to 0.3 mm, preferably of 0.1 mm to 0.2 mm.

4. Vehicle tyre (1) according to Claim 1 or 2, **characterized in that** at least one of the first transverse elevations (53) overlies the contour of the respective hatching rib (51) at the ridge (18) of the hatching rib by an overlying height (86) of 0.1 mm to 0.4 mm, preferably of 0.2 mm to 0.3 mm.

5. Vehicle tyre (1) according to at least one of the preceding claims, **characterized in that** at least one of the first transverse elevations (53) overlies the contour of the respective hatching rib (51), at least in the region of the flanks (14) of the hatching rib, by an overlying height (87) of 0.1 mm to 0.7 mm, preferably of 0.2 mm to 0.5 mm.

6. Vehicle tyre (1) according to at least one of the preceding claims, **characterized in that** the transverse elevations (53) of one adjacent hatching element (5) are arranged centrally offset relative to the transverse elevations (53) of the other adjacent hatching element (5).

7. Vehicle tyre (1) according to at least one of the preceding claims, **characterized in that** the hatching ribs (51) of the hatching elements (5) are arranged with a spacing (8) of 0.4 mm to 1.0 mm, preferably of 0.5 mm to 0.7 mm, particularly preferably of 0.55 mm to 0.60 mm.

8. Vehicle tyre (1) according to at least one of the preceding claims, **characterized in that** at least one of the hatching elements (5) has at least two adjacent first transverse elevations (53), which are arranged with a spacing (9) of 0.2 mm to 0.5 mm, preferably of 0.25 mm to 0.35 mm.

9. Vehicle tyre (1) according to at least one of the preceding claims, **characterized in that** a direction of longitudinal extent (10) of at least one of the hatching ribs (51) includes an angle (11) of 30° to 90°, preferably of 45° to 90°, particularly preferably of 60° to 90°, with a respective direction of longitudinal extent (12) of the first transverse elevations (53) crossing it.

10. Vehicle tyre (1) according to at least one of the preceding claims, **characterized in that** the hatching area (4) has at least two adjacent hatching elements (5), wherein the direction of longitudinal extent (12) of the transverse elevations (53) of one hatching element (5), relative to the direction of longitudinal extent (12) of the transverse elevations (53) of the other adjacent hatching element (5), has in a region (21) between the two hatching elements (5) a component oriented in the same or in the opposite direction of extent of the region.

11. Vehicle tyre (1) according to at least one of the preceding claims, **characterized in that** the hatching area (4) has at least two adjacent hatching elements (5), between the transverse elevations (53) of which there is a clear spacing (13) of 5% to 40%, preferably of 10% to 25%, particularly preferably of 13% to 20%, of the spacing (8) of the hatching ribs (51) of the adjacent hatching elements (5).

12. Vehicle tyre (1) according to at least one of the preceding claims, **characterized in that** at least one of the hatching elements (5) is designed in such a way that the hatching rib (51) of the hatching element (5) has mutually opposite flanks (14) which include an angle (15) of at least 50°, preferably of 55° to 65°, with one another.

13. Vehicle tyre (1) according to at least one of the preceding claims, **characterized in that** at least one of the hatching elements (5) has a hatching rib (51) and/or a first transverse elevation (53) with in each case mutually opposite flanks (14) which include an angle (15) of 4° to 20°, preferably of 12° to 18°, with one another.

14. Vehicle tyre (1) according to at least one of the preceding claims, **characterized in that** the vehicle tyre (1) has multiple hatching areas (4) which are arranged in such a way that they constitute a machine-readable code (41), preferably a two-dimensional code (41), particularly preferably a QR code (41).

15. Method for producing a moulding tool of a vulcanization device for moulding vulcanization of a vehicle tyre (1),
wherein the vehicle tyre (1) has side walls (2) and a tread (3) and at least one hatching area (4) on an outer surface (2, 3), in particular on one of the side walls (2) and/or on the tread (3), wherein the hatching area (4) has hatching elements (5) arranged one next to the other, wherein the hatching elements (5) each have a hatching rib (51) with a ridge (18) and with mutually opposite flanks (14),
wherein the hatching elements (5) moreover each have transverse elevations (53) with a ridge (54) and with mutually opposite flanks (14),
wherein the transverse elevations (53) are in this case arranged in a manner crossing the respective hatching rib (51) whereby, in plan view, the ridges (54) of the transverse elevations and the ridge (18) of the respective hatching rib cross, wherein each of the transverse elevations (53) crosses exactly one hatching rib (51), and wherein at least one first transverse elevation (53) of the transverse elevations of each of the hatching elements (5) overlies a contour of the hatching rib (51) of the respective hatching element at least at the ridge (18) of the hatching rib (51),
wherein the moulding tool has on a moulding surface a negative structure complementing the hatching elements (5) of the vehicle tyre (1), wherein the method comprises at least the following steps in the order set out:
a) providing a moulding tool having a moulding surface;
b) creating a hatching groove on the moulding surface of the moulding tool by way of removal of material, wherein the hatching groove is in the form of a negative structure complementing a hatching rib (51) of one of the hatching elements (5) and has a groove base complementing the ridge (18) of the hatching rib;
c) creating a first transverse depression on the moulding surface of the moulding tool, wherein the first transverse depression is in the form of a negative structure complementing the first transverse elevation (53) of the hatching element (5), and wherein the first transverse depression crosses the groove base of the hatching groove; wherein the first transverse depression is created by way of laser engraving through input of energy by means of a laser beam, and wherein the input of energy in the crossing region is also realized in the region of the hatching groove created beforehand in step b) by way of removal of material, in particular in the region of the groove base.

16. Method according to Claim 15, **characterized in that**, in step c), the laser beam is guided along at least one linear engraving path for the purpose of creating the first transverse groove, and **in that** the laser beam is in this case guided along the respective at least one linear engraving path at constant speed and/or constant intensity of the laser beam.

## Revendications

1. Pneu de véhicule (1) doté de parois latérales (2) et d'une bande de roulement (3) et doté d'au moins une surface hachurée (4) sur une surface extérieure (2, 3), en particulier sur l'une des parois latérales (2) et/ou la bande de roulement (3), la surface hachurée (4) présentant des éléments de hachurage (5) juxtaposés, les éléments de hachurage (5) présentant respectivement une nervure de hachurage (51) dotée d'une crête (18) ainsi que de flancs (14) opposés l'un à l'autre,
les éléments de hachurage (5) présentant en outre respectivement des rehaussements transversaux (53) dotés d'une crête (54) ainsi que de flancs (14) opposés l'un à l'autre,
les rehaussements transversaux (53) étant en l'occurrence disposés de manière à croiser la nervure de hachurage (51) respective, de telle sorte que les crêtes (54) des rehaussements transversaux et la crête (18) de la nervure de hachurage respective se croisent en vue de dessus,
chacun des rehaussements transversaux (53) croisant exactement une nervure de hachurage (51) et au moins un premier rehaussement transversal (53) des rehaussements transversaux de chacun des éléments de hachurage (5) étant superposé à un contour de la nervure de hachurage (51) de l' élément de hachurage respectif au moins au niveau de la crête (18) de la nervure de hachurage (51),
**caractérisé en ce que**
la surface hachurée (4) présente au moins deux éléments de hachurage (5) adjacents, dont les rehaussements transversaux (53) sont orientés dans une large mesure parallèlement les uns aux autres et **en ce que** les rehaussements transversaux (53) de l'un des éléments de hachurage (5) adjacents sont disposés de manière décalée par rapport aux rehaussements transversaux (53) de l'autre élément de hachurage (5) adjacent.

2. Pneu de véhicule (1) selon la revendication 1, **caractérisé en ce qu'**au moins l'une des nervures de hachurage (51) présente une hauteur H de 0,1 mm à 0,8 mm, de préférence de 0,2 mm à 0,5 mm, de manière particulièrement préférée de 0,25 mm à 0,35 mm.

3. Pneu de véhicule (1) selon la revendication 1 ou 2, **caractérisé en ce qu'**au moins l'un des premiers rehaussements transversaux (53) est superposé au contour de la nervure de hachurage (51) respective au niveau de la crête (18) de la nervure de hachurage sur une hauteur de superposition (86) de 0,05 mm à 0,3 mm, de préférence de 0,1 mm à 0,2 mm.

4. Pneu de véhicule (1) selon la revendication 1 ou 2, **caractérisé en ce qu'**au moins l'un des premiers rehaussements transversaux (53) est superposé au contour de la nervure de hachurage (51) respective au niveau de la crête (18) de la nervure de hachurage sur une hauteur de superposition (86) de 0,1 mm à 0,4 mm, de préférence de 0,2 mm à 0,3 mm.

5. Pneu de véhicule (1) selon au moins l'une des revendications précédentes, **caractérisé en ce qu'**au moins l'un des premiers rehaussements transversaux (53) est superposé au contour de la nervure de hachurage (51) respective au moins dans la région des flancs (14) de la nervure de hachurage sur une hauteur de superposition (87) de 0,1 mm à 0,7 mm, de préférence de 0,2 mm à 0,5 mm.

6. Pneu de véhicule (1) selon au moins l'une des revendications précédentes, **caractérisé en ce que** les rehaussements transversaux (53) de l'un des éléments de hachurage (5) adjacents sont disposés de manière décalée centralement par rapport aux rehaussements transversaux (53) de l'autre élément de hachurage (5) adjacent.

7. Pneu de véhicule (1) selon au moins l'une des revendications précédentes, **caractérisé en ce que** les nervures de hachurage (51) des éléments de hachurage (5) sont disposées à une distance (8) de 0,4 mm à 1,0 mm, de préférence de 0,5 mm à 0,7 mm, de manière particulièrement préférée de 0,55 mm à 0,60 mm.

8. Pneu de véhicule (1) selon au moins l'une des revendications précédentes, **caractérisé en ce qu'**au moins l'un des éléments de hachurage (5) présente au moins deux premiers rehaussements transversaux (53) qui sont disposés à une distance (9) de 0,2 mm à 0,5 mm, de préférence de 0,25 mm à 0,35 mm.

9. Pneu de véhicule (1) selon au moins l'une des revendications précédentes, **caractérisé en ce qu'**une direction d'étendue longitudinale (10) d'au moins l'une des nervures de hachurage (51) forme un angle (11) de 30° à 90°, de préférence de 45° à 90°, de manière particulièrement préférée de 60° à 90°, avec une direction d'étendue longitudinale (12) respective des premiers rehaussements transversaux (53) se croisant.

10. Pneu de véhicule (1) selon au moins l'une des revendications précédentes, **caractérisé en ce que** la surface hachurée (4) présente au moins deux éléments de hachurage (5) adjacents, la direction d'étendue longitudinale (12) des rehaussements transversaux (53) de l'un des éléments de hachurage (5) présentant, par rapport à la direction d'étendue longitudinale (12) des rehaussements transversaux (53) de l'autre élément de hachurage (5) dans une région (21) entre les deux éléments de hachurage (5), une composante orientée dans la même direction d'étendue longitudinale de la région ou dans la direction d'étendue opposée de la région.

11. Pneu de véhicule (1) selon au moins l'une des revendications précédentes, **caractérisé en ce que** la surface hachurée (4) présente au moins deux éléments de hachurage (5) adjacents, entre les éléments transversaux (53) desquels existe une distance libre (13) de 5 % à 40 %, de préférence de 10 % à 25 %, de manière particulièrement préférée de 13 % à 20 %, de la distance (8) des nervures de hachurage (51) des éléments de hachurage (5) adjacents.

12. Pneu de véhicule (1) selon au moins l'une des revendications précédentes, **caractérisé en ce qu'**au moins l'un des éléments de hachurage (5) est formé de telle sorte que la nervure de hachurage (51) de l' élément de hachurage (5) présente des flancs (14) opposés l'un à l'autre qui forment entre eux un angle (15) d'au moins 50°, de préférence de 55° à 65°.

13. Pneu de véhicule (1) selon au moins l'une des revendications précédentes, **caractérisé en ce qu'**au moins l'un des éléments de hachurage (5) présente une nervure de hachurage (51) et/ou un premier rehaussement transversal (53) doté de flancs (14) respectivement opposés l'un à l'autre, qui forment entre eux un angle (15) de 4° à 20°, de préférence de 12° à 18°.

14. Pneu de véhicule (1) selon au moins l'une des revendications précédentes, **caractérisé en ce que** le pneu de véhicule (1) présente plusieurs surfaces hachurées (4) qui sont disposées de telle sorte qu'elles représentent un code (41) lisible par machine, de préférence un code (41) bidimensionnel, de manière particulièrement préférée un code QR (41).

15. Procédé de fabrication d'un outil de moulage d'un dispositif de vulcanisation servant à la mise en forme par vulcanisation d'un pneu de véhicule (1),
le pneu de véhicule (1) présentant des parois latérales (2) et une bande de roulement (3) et au moins une surface hachurée (4) sur une surface extérieure (2, 3), en particulier sur l'une des parois latérales (2) et/ou la bande de roulement (3), la surface hachurée (4) présentant des éléments de hachurage (5) juxtaposés, les éléments de hachurage (5) présentant respectivement une nervure de hachurage (51) dotée d'une crête (18) ainsi que de flancs (14) opposés l'un à l'autre,
les éléments de hachurage (5) présentant en outre respectivement des rehaussements transversaux (53) dotés d'une crête (54) ainsi que de flancs (14) opposés l'un à l'autre,
les rehaussements transversaux (53) étant en l'occurrence disposés de manière à croiser la nervure de hachurage (51) respective, de telle sorte que les crêtes (54) des rehaussements transversaux et la crête (18) de la nervure de hachurage respective se croisent en vue de dessus,
chacun des rehaussements transversaux (53) croisant exactement une nervure de hachurage (51) et au moins un premier rehaussement transversal (53) des rehaussements transversaux de chacun des éléments de hachurage (5) étant superposé à un contour de la nervure de hachurage (51) de l' élément de hachurage respectif au moins au niveau de la crête (18) de la nervure de hachurage (51),
l'outil de moulage présentant, sur une surface de moulage, une structure négative complémentaire aux éléments de hachurage (5) du pneu de véhicule (1), le procédé présentant au moins les étapes suivantes dans l'ordre indiqué :
a) fourniture d'un outil de moulage présentant une surface de moulage ;
b) production d'une rainure de hachurage sur la surface de moulage de l'outil de moulage par enlèvement de matière, la rainure de hachurage étant réalisée sous la forme d'une structure négative complémentaire à une nervure de hachurage (51) de l'un des éléments de hachurage (5) et présentant un fond de rainure complémentaire à la crête (18) de la nervure de hachurage ;
c) production d'un premier évidement transversal sur la surface de moulage de l'outil de moulage, le premier évidement transversal étant réalisé sous forme de structure négative complémentaire au premier rehaussement transversal (53) de l'élément de hachurage (5) et le premier évidement transversal croisant le fond de rainure de la rainure de hachurage ; la production du premier évidement transversal s'effectuant par gravure au laser par apport d'énergie au moyen d'un faisceau laser et l'apport d'énergie dans la région de croisement s'effectuant également dans la région de la rainure de hachurage produite préalablement à l'étape b) par enlèvement de matière, en particulier dans la région du fond de rainure.

16. Procédé selon la revendication 15, **caractérisé en ce qu'**à l'étape c) le faisceau laser est guidé le long d'au moins un trajet de gravure linéaire pour la production de la première rainure transversale et **en ce que** le faisceau laser est guidé en l'occurrence à une vitesse constante et/ou à une intensité constante du faisceau laser le long de l'au moins un trajet de gravure linéaire respectif.
